# EUROPEAN PATENT APPLICATION

(11) **EP 2 840 489 A1**
(43) Date of publication of application: **25.02.2015**
(21) Application number: 12876695.3
(22) Date of filing: 13.07.2012
(51) Int. Cl.: G06F 9/445

(54) **DRIVER MANAGEMENT METHOD AND APPARATUS FOR MAC SYSTEM**

(30) Priority: 18.05.2012 CN 201210156439
(71) Applicant: ZTE Corporation, Shenzhen, Guangdong 518057 (CN)
(72) Inventor: LI, Yanfeng, Shenzhen Guangdong 518057 (CN); ZUO, Zhao, Shenzhen Guangdong 518057 (CN)
(74) Representative: Benson, Christopher
(86) International application number: PCT/CN2012/078627
(87) International publication number: WO 2013/170530

(57) **Abstract**

A driver management method and apparatus for a Mac system are provided. The method includes: receiving a driver file uninstallation instruction of a current device; determining whether the driver file is installed only in the current device among devices without uninstalling the driver files according to the driver file uninstallation instruction; if yes, uninstalling the driver file; if no, reserving the driver file. The method and apparatus solves a compatibility problem of multiple devices sharing a driver file very well. When the current device needs to uninstall the driver file, it is ensured that other devices that need to load the driver file can normally load and use the driver file, thereby avoiding the occurrence of the condition of the drive conflict resulted from the erroneous deletion of the driver file.

## Description

### Technical Field

The present invention relates to the wireless communication technology field, and in particular, to a driver management method and apparatus for a Mac system.

### Background of the Related Art

With the evolution of the technology and the popularization of the mobile broadband, the mobile Internet provides the abundant services, such as, the home entertainment, the commercial office, etc., for people. On the basis of the expansion of the 3G and the 4G services, increasing Internet applications can be developed, which makes the pursuit for the mobile broadband speed become one of the main targets. With the progress of the technology and the update of the products, it makes that one user having the mobile broadband devices with multiple standards and multiple network characteristics becomes the increasingly extensive thing, and how to realize the support and compatibility of the multiple mobile broadband devices on one machine becomes the difficult problem that the current situation is most complicated and the conditions are the most.

The Mac system is a dedicated system of the apple machine and is a graphical operating system based on the Unix kernel. Because the Mac system adopts the mechanism based on the Unix, when the drive of every device is configured and managed, it cannot record and track various information by using the registry and cannot realize the drive configuration and management information based on the file storage through the simple file operation interface either, and how to design and realize the configuration and management of the drive information in the Mac system becomes a difficult problem. In the existing Mac system, because the application environment is complicated, multiple mobile broadband devices usually shares one driver file. One device needs to install the driver file of the device before loading the drive for the first time; when the driver files of multiple devices are the same, then it will install the driver file for many times; because the driver files are the same driver file, they will be overwritten and installed in the system when installing, that is, it means to store one driver file in the system, and this will cause that, after the driver file of a certain device is uninstalled, the driver file is no longer in the system, and then other devices also cannot be driven, thus resulting in the occurrence of the drive conflict.

### Summary of the Invention

The main purpose of the embodiment of the present invention is to provide a driver management method and apparatus for a Mac system, thereby avoiding the occurrence of the drive conflict.

The embodiment of the present invention provides a driver management method for a Mac system, comprising:
receiving a driver file uninstallation instruction of a current device; and
determining whether a driver file is installed only in a current device among devices without uninstalling the driver file according to the driver file uninstallation instruction; if yes, then uninstalling the driver file; if no, then reserving the driver file.

The step of determining whether a driver file is installed only in a current device among devices without uninstalling the driver file according to the driver file uninstallation instruction; if yes, then uninstalling the driver file; if no, then reserving the driver file comprises:
controlling an installation count of the driver file minus 1;
determining whether the installation count of the driver file is 0;
if yes, then uninstalling the driver file;
if no, then reserving the driver file.

Before the step of receiving the driver file uninstallation instruction of the current device, the driver management method for the Mac system further comprises:
receiving a driver file installation instruction of the current device;
installing the driver file of the current device, and controlling the installation count of the driver file plus 1.

After the step of installing the driver file of the current device and controlling the installation count of the driver file plus 1, the driver management method for the Mac system further comprises:
storing device information of the current device when the current device is connected with the Mac system.

After the step of storing device information of the current device when the current device is connected with the Mac system, the driver management method for the Mac system further comprises:
receiving a drive loading instruction;
inquiring the device information of the current device;
loading the driver file for the current device according to an inquiry result when the device information of the current device exists.

After the step of receiving the driver file uninstallation instruction of the current device, the driver management method for the Mac system further comprises:
deleting the device information of the current device.

The embodiment of the present invention further provides a driver management apparatus for a Mac system, comprising an uninstallation module and a configuration management module, wherein:
the uninstallation module is configured to: receive a driver file uninstallation instruction of a current device; uninstall the driver file according to an uninstallation instruction output by the configuration management module; and reserve the driver file according to a reservation instruction output by the configuration management module;
the configuration management module is configured to: determine whether the driver file is installed only in the current device among devices without uninstalling the driver file according to the driver file uninstallation instruction; if yes, then output the uninstallation instruction to the uninstallation module; if no, then output the reservation instruction to the uninstallation module.

The configuration management module comprises a drive counter and a judgment unit, wherein:
the drive counter is configured to: control an installation count of the driver file minus 1 according to the drive file uninstallation instruction of the current device received by the uninstallation module;
the judgment unit is configured to: determine whether the installation count of the driver file recorded in the drive counter is 0; if yes, then output the uninstallation instruction to the uninstallation module; if no, then output the reservation instruction to the uninstallation module.

The driver management apparatus for the Mac system further comprises: an installation module, wherein:
the installation module is configured to: receive a driver file installation instruction of the current device; and install the driver file of the current device;
the drive counter is further configured to: control the installation count of the driver file plus 1 according to the drive file installation instruction of the current device received by the installation module.

The configuration management module further comprises a storage unit:
the storage unit is configured to: store device information of the current device when the current device is connected with the Mac system.

The driver management apparatus for the Mac system further comprises: a drive loading module, wherein:
the drive loading module is configured to: receive a drive loading instruction; inquire the device information of the current device in the storage unit; and load the driver file for the current device according to an inquiry result when the device information of the current device exists.

The drive loading module is further configured to: delete the device information of the current device according to the drive file uninstallation instruction of the current device received by the uninstallation module.

The embodiment of the present invention solves a compatibility problem of multiple devices sharing a driver file very well. When the current device needs to uninstall the driver file, it is ensured that other devices that need to load the driver file can normally load and use the driver file, thereby avoiding the occurrence of the condition of the drive conflict resulted from the erroneous deletion of the driver file.

### Brief Description of Drawings

FIG. 1 is a flow chart of a driver management method for a Mac system in an embodiment of the present invention;
FIG. 2 is a flow chart of a driver management method for a Mac system in another embodiment of the present invention;
FIG. 3 is a flow chart of steps of loading a drive in a driver management method for a Mac system in an embodiment of the present invention;
FIG. 4 is a flow chart of steps of uninstalling a drive in a driver management method for a Mac system in an embodiment of the present invention;
FIG. 5 is a flow chart of steps of installing a drive in a driver management method for a Mac system in an embodiment of the present invention;
FIG. 6 is a flow chart of steps of loading a drive in a driver management method for a Mac system in another embodiment of the present invention;
FIG. 7 is a flow chart of steps of uninstalling a drive in a driver management method for a Mac system in another embodiment of the present invention;
FIG. 8 is a structure diagram of a driver management apparatus for a Mac system in an embodiment of the present invention;
FIG. 9 is a structure diagram of a driver management apparatus for a Mac system in a further embodiment of the present invention;
FIG. 10 is a structure diagram of a driver management apparatus for a Mac system in another embodiment of the present invention;
FIG. 11 is a structure diagram of a driver management apparatus for a Mac system in yet another embodiment of the present invention.

The realization, functional characteristic and advantage of the embodiment of the present invention are further described with reference to the accompanying drawings and in combination with embodiments hereinafter.

### Preferred Embodiments of the Present Invention

It should be understood that, the embodiments illustrated hereinafter are used to describe and explain the present invention, rather than constituting an inappropriate limitation to the present invention.

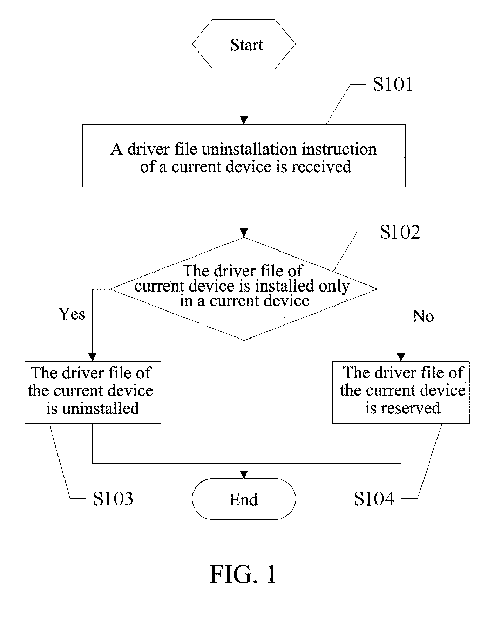

As shown in FIG. 1, FIG. 1 is a flow chart of a driver management method for a Mac system in an embodiment of the present invention. The driver management method for the Mac system mentioned in the embodiment includes the following steps.

In step S101, a driver file uninstallation instruction of a current device is received.

In step S102, it is determined whether the driver file of the current device has been installed only in the current device among devices without uninstalling the driver file according to the driver file uninstallation instruction, if yes, step S103 is executed, if no, step S104 is executed.

In step S103, the driver file of the current device is uninstalled.

In step S104, the driver file of the current device is reserved.

In the present embodiment, when the driver file of the current device is uninstalled, through determining whether other devices have installed the above-mentioned driver file to be uninstalled, if yes, then the driver file is reserved, so as to ensure other devices which need to load the driver file to be able to load and use it normally, thereby avoiding the occurrence of the condition of the drive conflict resulted from the erroneous deletion of the driver file, so that the compatibility problem of multiple devices sharing the driver file can be solved very well.

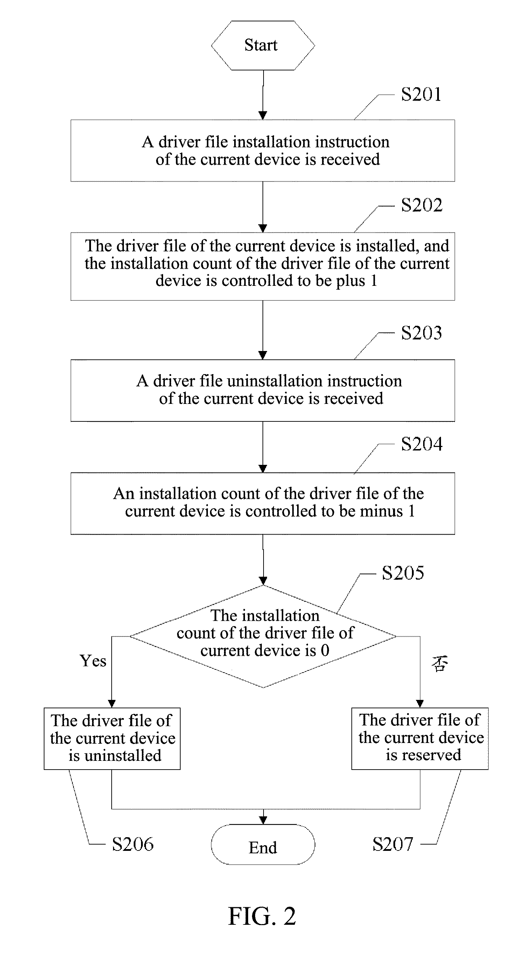

As shown in FIG. 2, FIG. 2 is a flow chart of a driver management method for a Mac system in another embodiment of the present invention, including the following steps.

In step S201, a driver file installation instruction of the current device is received.

In step S202, the driver file of the current device is installed, and the installation count of the driver file of the current device is controlled to be plus 1.

In the present embodiment when the drive is installed, every time when the same driver file is installed, the former installed driver file is overwritten, and the number of repeated installations of the driver file is counted to be plus 1, to identify the number of times for installing the same driver file, that is, to identify how many devices have installed the driver file. In addition, the version levels of the driver file to be installed and the driver file which has already existed in the system are distinguished before the installation, and only the driver file with a higher version is installed, so as to ensure the version of driver file stored in the system is the latest version.

In step S203, a driver file uninstallation instruction of the current device is received.

In step S204, an installation count of the driver file of the current device is controlled to be minus 1.

In step S205, it is determined whether the installation count of the driver file of the current device is 0; if yes, then step S206 is executed; if no, then step S207 is executed.

In step S206, the driver file of the current device is uninstalled.

In step S207, the driver file of the current device is reserved.

In the present embodiment, when the drive is uninstalled, for the situation of multiple devices installing the same driver file, because only one driver file exists in the system, when uninstalling the driver file of one device therein, the driver file is not deleted directly but the number of repeated installations of the driver file recorded in the system is counted to be minus 1, and it is determined whether the installation count minus 1 is 0, that is, it determines whether only the current device to uninstall the driver file has installed the driver file. If the installation count minus 1 is 0, then it represents that only the current device to uninstall the driver file has installed the driver file, then the driver file should be uninstalled directly; if the installation count minus 1 is greater than 0, then it represents that there are also other devices which have installed the driver file among devices without uninstalling the driver file; in order to ensure other devices which need to load the driver file to be able to load and use it normally, the driver file should be reserved, thereby avoiding the occurrence of the condition of the drive conflict resulted from the erroneous deletion of the driver file.

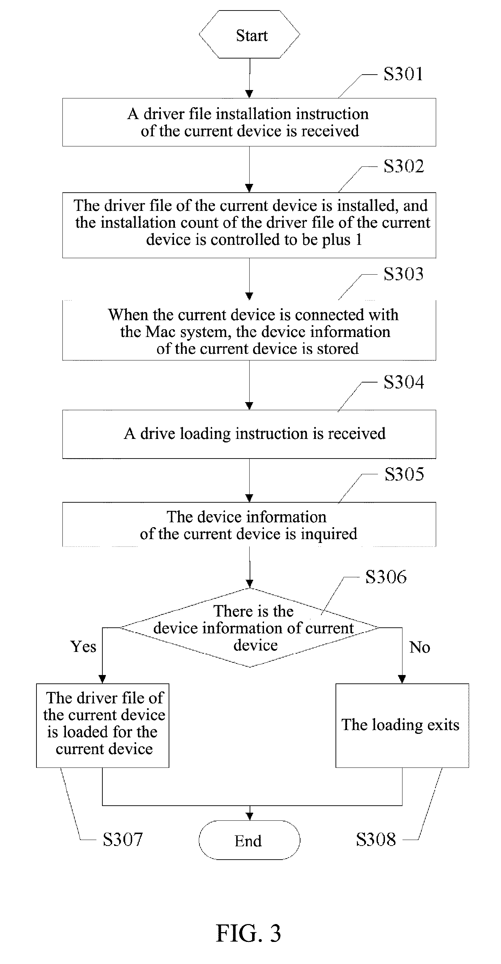

As shown in FIG. 3, FIG. 3 is a flow chart of steps of loading a drive in a driver management method for a Mac system in an embodiment of the present invention, including the following steps.

In step S301, a driver file installation instruction of the current device is received.

In step S302, the driver file of the current device is installed, and the installation count of the driver file of the current device is controlled to be plus 1.

In step S303, when the current device is connected with the Mac system, the device information of the current device is stored.

In the present embodiment, the device information of the device corresponding to the driver file which has already been installed is stored, to uniquely identify the device corresponding to the driver file which has already been installed. Wherein, the device information can include the device ID, series number, etc.

In step S304, a drive loading instruction is received.

In step S305, the device information of the current device is inquired.

In step S306, it is determined whether there is the device information of the current device according to an inquiry result; if yes, then step S307 is executed; if no, then step S308 is executed.

In step S307, the current device loads the driver file of the current device.

In step S308, the loading exits.

In the present embodiment, the drive loading is performed only for the device corresponding to the driver file which has already been installed, thus preventing other devices which do not install the driver file from loading the drive, which can improve the efficiency of drive loading effectively.

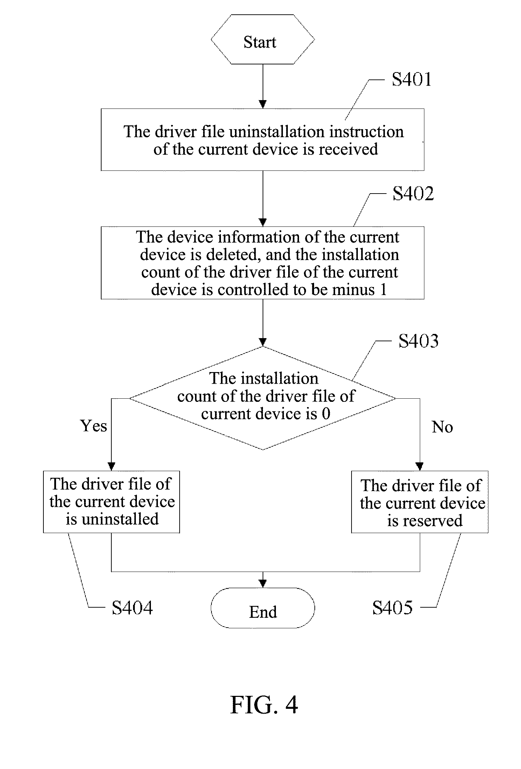

As shown in FIG. 4, FIG. 4 is a flow chart of steps of uninstalling a drive in a driver management method for a Mac system in an embodiment of the present invention, including the following steps.

In step S401, the driver file uninstallation instruction of the current device is received.

In step S402, the device information of the current device is deleted, and the installation count of the driver file of the current device is controlled to be minus 1.

In step S403, it is determined whether the installation count of the driver file of the current device is 0; if yes, then step S404 is executed; if no, then step S405 is executed.

In step S404, the driver file of the current device is uninstalled.

In step S405, the driver file of the current device is reserved.

In the present embodiment, when the drive is uninstalled, for the situation of multiple devices installing the same driver file, because only one driver file exists in the system, when uninstalling the driver file of one device therein, the driver file is not deleted directly but the number of repeated installations of the driver file recorded in the system is counted to be minus 1. If the installation count minus 1 is 0, then it represents that only the current device to uninstall the driver file has installed the driver file, then the driver file should be uninstalled directly; if the installation count minus 1 is greater than 0, then it represents that there are also other devices which have installed the driver file among devices without uninstalling the driver file; in order to ensure other devices which need to load the driver file to be able to load and use it normally, the driver file should be reserved, thereby avoiding the occurrence of the condition of the drive conflict resulted from the erroneous deletion of the driver file.

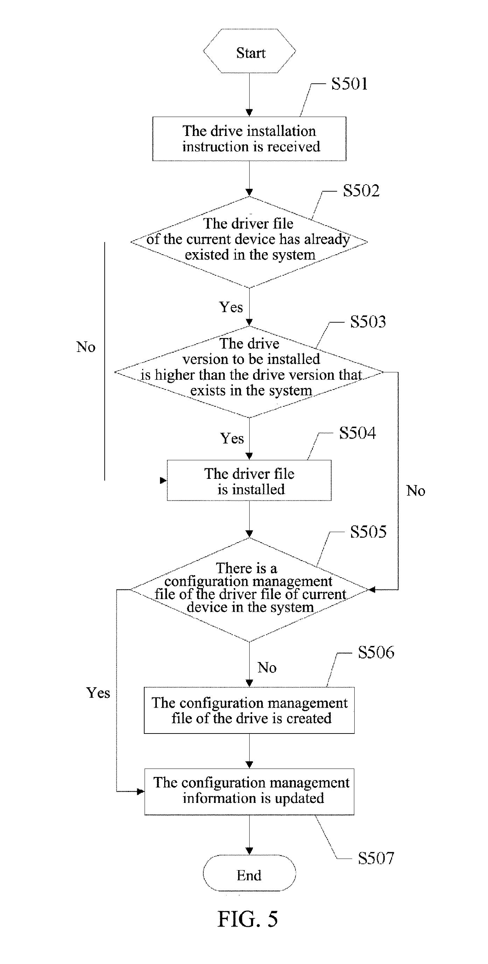

As shown in FIG. 5, FIG. 5 is a flow chart of steps of installing a drive in a driver management method for a Mac system in an embodiment of the present invention, including the following steps.

In step S501, the drive installation instruction is received.

In step S502, it is determined whether the driver file of the current device has already existed in the system; if yes, then step S503 is executed; if no, then step S504 is executed.

In the present embodiment, when the system does not have the corresponding driver file, the above-mentioned driver file is directly installed.

In step S503, it is determined whether the drive version to be installed is higher than the drive version that exists in the system; if yes, then step S504 is executed; if no, then step S505 is executed.

In step S504, the driver file is installed.

In the present embodiment, when the version of driver file to be installed is higher than the version of driver file that exists in the system, the driver file with the high version overwrites the driver file with the low version; if the version of driver file to be installed is lower than the version of driver file that exists in the system, then the version is jumped over, and only the installation count of the driver file is added by 1. The version levels of the driver file to be installed and the driver file which has already existed in the system are distinguished before the installation of the driver file, and only the driver file with a higher version is installed, so as to ensure the version of driver file stored in the system to be the latest version.

In step S505, it is determined whether there is a configuration management file of the driver file of the current device in the system; if yes, then step S507 is executed; if no, then step S506 is executed.

In step S506, the configuration management file of the driver file is created, and step S507 is executed.

In step S507, the configuration management information is updated, including adding the installation count of the driver file by 1 and updating the version information of the driver file.

In the present embodiment, a configuration management file is created for every installed driver file, and the version information of the driver file, the device information of the device and the installation count of the driver file are stored in the configuration management file, so that the management and configuration of the bottom layer device of the Mac system is more reliable.

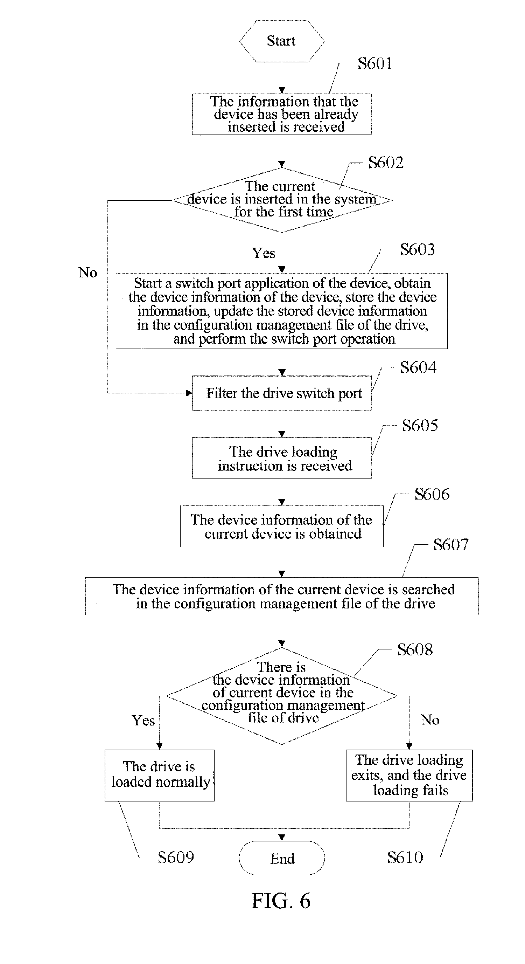

As shown in FIG. 6, FIG. 6 is a flow chart of steps of loading a drive in a driver management method for a Mac system in another embodiment of the present invention, including the following steps.

In step S601, the information that the device has already been inserted is received.

In step S602, it is determined whether the device is inserted in the system for the first time; if yes, then step S603 is executed; if no, then step S604 is executed.

In step S603, it starts a switch port application of the device, obtains the device information of the device, stores the device information, updates the stored device information in the configuration management file of the drive and performs the switch port operation.

In step S604, the drive switch port is filtered.

In step S605, the drive loading instruction is received.

In step S606, the device information of the current device is obtained.

In step S607, the device information of the current device is searched in the configuration management file of the drive.

In step S608, it is determined whether there is the device information of the current device in the configuration management file of the drive; if yes, then step S609 is executed; if no, then step S610 is executed.

In step S609, the drive is loaded normally.

In step S610, the drive loading exits, and the drive loading fails.

In the present embodiment, the device information is obtained when the device corresponding to the driver file which has already been installed is inserted for the first time, and it will not be obtained any more when the device is inserted again, which reduces the subsequence loading procedure of the device and improves the system processing procedure effectively.

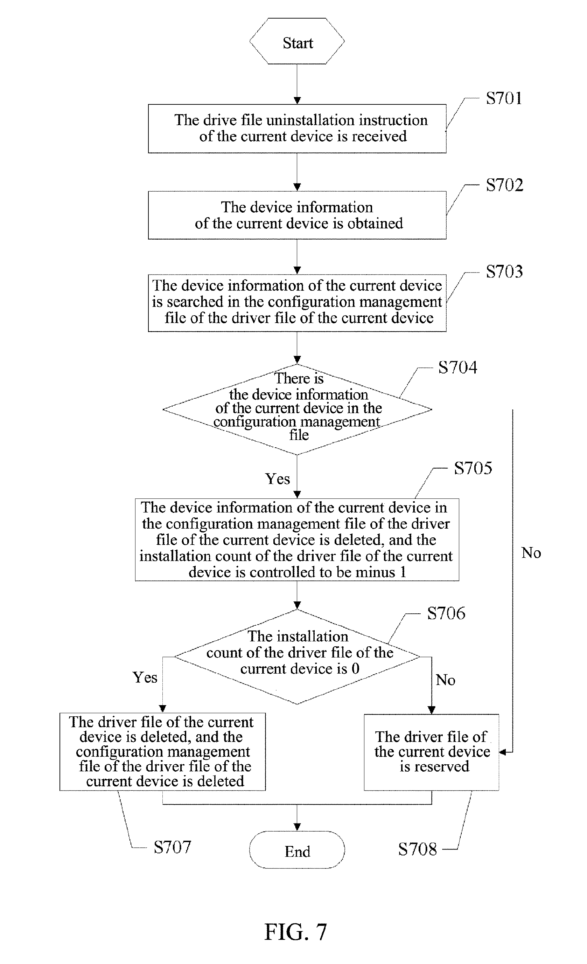

As shown in FIG. 7, FIG. 7 is a flow chart of steps of uninstalling a drive in a driver management method for a Mac system in another embodiment of the present invention, including the following steps.

In step S701, the drive file uninstallation instruction is received.

In step S702, the device information of the current device is obtained.

In step S703, the device information of the current device is searched in the configuration management file of the driver file of the current device.

In step S704, it is determined whether there is the device information of the current device in the configuration management file of the driver file of the current device; if yes, then step S705 is executed; if no, then step S706 is executed.

In step S705, the device information of the current device in the configuration management file of the driver file of the current device is deleted, and the installation count of the driver file of the current device is controlled to be minus 1.

In step S706, it is determined whether the installation count of the driver file of the current device is 0; if yes, then step S707 is executed; if no, then step S708 is executed.

In step S707, the driver file of the current device is deleted, and the configuration management file of the driver file of the current device is deleted.

In step S708, the driver file of the current device is reserved.

In the present embodiment, when the drive is uninstalled, the driver file is not deleted directly and only the device information of the current device is deleted and the number of repeated installations of the driver file recorded in the system is counted to be minus 1. If the installation count minus 1 is 0, then it represents that only the current device to uninstall the driver file has installed the driver file, then the driver file should be uninstalled directly; if the installation count minus 1 is greater than 0, then it represents that there are also other devices which have installed the driver file among devices without uninstalling the driver file; in order to ensure other devices which need to load the driver file to be able to load and use it normally, the driver file should be reserved, thereby avoiding the occurrence of the condition of the drive conflict resulted from the erroneous deletion of the driver file.

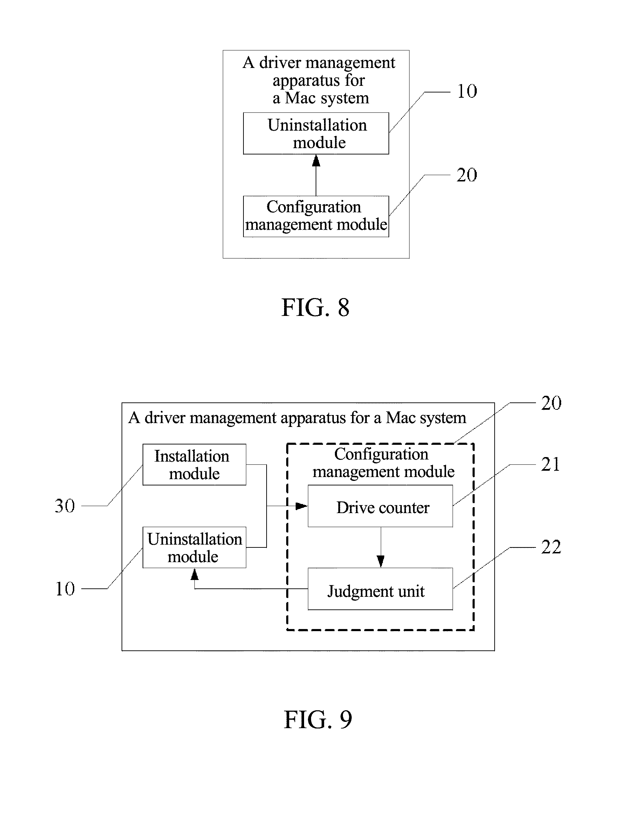

As shown in FIG. 8, FIG. 8 is a structure diagram of a driver management apparatus for a Mac system in an embodiment of the present invention. The driver management apparatus for a Mac system mentioned in the embodiment includes an uninstallation module 10 and a configuration management module 20, wherein:
the uninstallation module 10 is configured to: receive a driver file uninstallation instruction of a current device; uninstall the driver file according to an uninstallation instruction output by the configuration management module 20; and reserve the driver file according to a reservation instruction output by the configuration management module 20; and
the configuration management module 20 is configured to: determine whether the driver file is installed only in the current device among devices without uninstalling the driver file according to the driver file uninstallation instruction; if yes, then output the uninstallation instruction to the uninstallation module 10; if no, then output the reservation instruction to the uninstallation module 10.

In the present embodiment, when the uninstallation module 10 uninstalls the driver file of the current device, it is determined whether other devices have installed the above-mentioned driver file to be uninstalled through the configuration management module 20, if yes, then the uninstallation module 10 reserves the driver file, so as to ensure other devices which need to load the driver file to be able to load and use it normally, thereby avoiding the occurrence of the condition of the drive conflict resulted from the erroneous deletion of the driver file, so that the compatibility problem of multiple devices sharing the driver file can be solved very well.

As shown in FIG. 9, FIG. 9 is a structure diagram of a driver management apparatus for a Mac system in a further embodiment of the present invention. The driver management apparatus for the Mac system further includes an installation module 30.

The installation module 30 is configured to: receive a driver file installation instruction of the current device; and install the driver file of the current device.

The configuration management module 20 includes a drive counter 21 and a judgment unit 22.

The drive counter 21 is configured to: control the installation count of the driver file plus 1 according to the drive file installation instruction of the current device received by the installation module 30; control an installation count of the driver file minus 1 according to the drive file uninstallation instruction of the current device received by the uninstallation module 10;
the judgment unit 22 is configured to: determine whether the installation count of the driver file recorded in the drive counter 21 is 0; if yes, then output the uninstallation instruction to the uninstallation module 10; and if no, then output the reservation instruction to the uninstallation module 10.

In the present embodiment, when the installation module 30 is installing the drive, every time when the same driver file is installed, the former installed driver file is overwritten, and the number of repeated installations of the driver file is counted to be plus 1 by the drive counter 21 of the configuration management module 20, to identify the number of times for installing the same driver file, that is, to identify how many devices have installed the driver file. In addition, the installation module 30 can distinguish the version levels of the driver file to be installed and the driver file which has already existed in the system before the installation, and when the version of driver file to be installed is higher than the version of driver file that exists in the system, the driver file with the high version overwrites the driver file with the low version; if the version of driver file to be installed is lower than the version of driver file that exists in the system, then the version is jumped over, and only the installation count of the driver file is added by 1, that is, only the driver file with a higher version is installed, so as to ensure the driver file version stored in the system is the latest version. Meanwhile, when the installation module 30 installs the driver, the configuration management module 20 establishes a configuration management file for every installed driver file, and in the configuration management file, the version information of the driver file, the device information of the device and the installation count of the driver file are stored, so that the management and configuration of the bottom layer device of the Mac system is more reliable.

In the present embodiment, when the drive is uninstalled, for the situation of multiple devices installing the same driver file, because only one driver file exists in the system, when the uninstallation module 10 uninstalls the driver file of one device therein, the driver file is not deleted directly but the number of repeated installations of the driver file recorded in the system is counted to be minus 1 by the drive counter 21 of the configuration management module 20, and it is determined whether the installation count minus 1 is 0 by the judgment unit 22, that is, it is determined whether only the current device to uninstall the driver file has installed the driver file. If the installation count minus 1 is 0, then it represents that only the current device to uninstall the driver file has installed the driver file, then the uninstallation module 10 should uninstall the driver file directly; if the installation count minus 1 is greater than 0, then it represents that there are also other devices which have installed the driver file among devices without uninstalling the driver file; in order to ensure other devices which need to load the driver file to be able to load and use it normally, the uninstallation module 10 should reserve the driver file, thereby avoiding the occurrence of the condition of the drive conflict resulted from the erroneous deletion of the driver file.

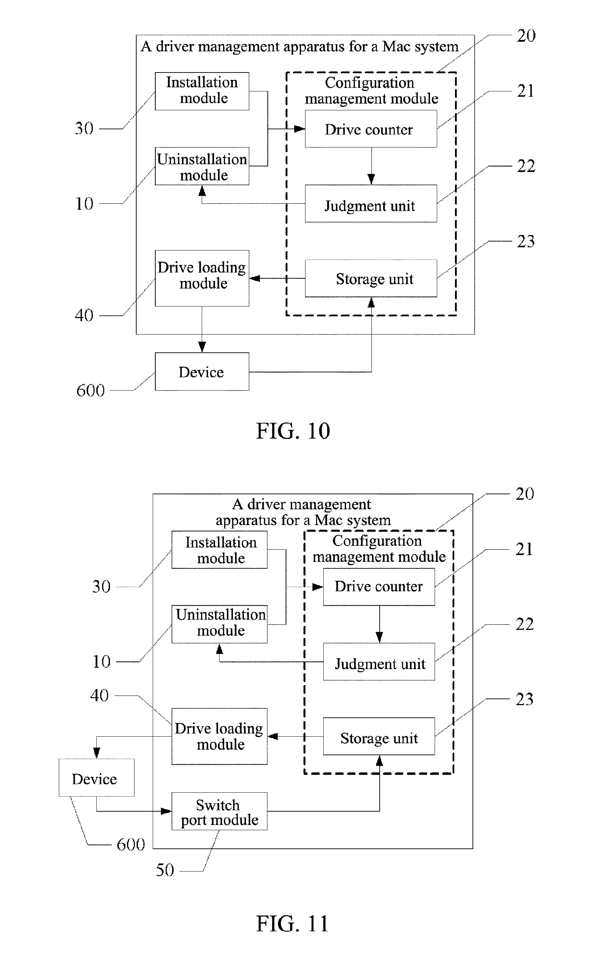

As shown in FIG. 10, FIG. 10 is a structure diagram of a driver management apparatus for a Mac system in another embodiment of the present invention. The configuration management module 20 further includes a storage unit 23.

The storage unit is configured to: store device information of the current device when the current device is connected with the Mac system; delete the device information of the current device according to the driver file uninstallation instruction of the current device received by the uninstallation module 10.

The driver management apparatus for the Mac system further includes a drive loading module 40.

The drive loading module 40 is configured to: receive a drive loading instruction; inquire the device information of the current device in the storage unit 23; according to an inquiry result, load the driver file for the current device when the device information of the current device exists.

The driver management apparatus for the Mac system of the present embodiment can obtain the specific information of the current inserted device accurately through the switch port after the device is inserted for the first time, such as, the device ID, series number, etc. The storage unit 23 stores the device information of the device corresponding to the driver file which has already been installed, to uniquely identify the device corresponding to the driver file which has already been installed. Wherein, the device information can include the device ID, series number, etc. And it will not be obtained any more when the device is inserted again, which reduces the subsequence loading procedure of the device and improves the system processing procedure effectively. When the driver is loaded, the drive loading module 40 only loads the drive for the device that has the device information recorded in the storage unit 23, that is, the drive is only loaded for the device corresponding to the driver file which has already been installed, thus preventing other devices which do not install the driver file from loading the drive, which can improve the efficiency of drive loading effectively.

When the drive is uninstalled, for the situation of multiple devices installing the same driver file, because only one driver file exists in the system, when the uninstallation module 10 uninstalls the driver file of one device therein, the driver file is not deleted directly but the device information of the current device is deleted by the storage unit 23 and the number of repeated installations of the driver file recorded in the system is counted to be minus 1 by the drive counter 21. If the installation count minus 1 is 0, then it represents that only the current device to uninstall the driver file has installed the driver file, then the uninstallation module 10 should uninstall the driver file directly; if the installation count minus 1 is greater than 0, then it represents that there are also other devices which have installed the driver file among devices without uninstalling the driver file; in order to ensure other devices which need to load the driver file to be able to load and use it normally, the uninstallation module 10 should reserve the driver file, thereby avoiding the occurrence of the condition of the drive conflict resulted from the erroneous deletion of the driver file.

As shown in FIG. 11, FIG. 11 is a structure diagram of a driver management apparatus for a Mac system in yet another embodiment of the present invention. The driver management apparatus for the Mac system further includes a switch port module 50.

The switch port module 50 is configured to: when the current device 600 is inserted into the system for the first time, obtain and send the device information to the storage unit 23; execute the switch port operation.

The switch port module 50 in the present embodiment switches to the composite device mode from the CD mode after the device 600 is inserted for the first time. The switch port module can obtain the specific information of the current inserted device 600 accurately, such as, the device ID, series number, etc., and later it stores the above-mentioned information and executes the switch port operation through a switch port operation instruction, and outputs the stored the device information to the storage unit 23 of the configuration management module 20, to uniquely identify the device corresponding to the driver file which has already been installed.

The above description is only the preferable embodiments of the present invention and is not intended to limit the patent scope of the present invention. All conversions of equivalents structures and equivalents procedures made by using the description and accompanying drawings of the present invention, or direct or indirect applications in other related technical field, should be embodied in the patent protection scope of the present invention.

### Industrial Applicability

The embodiment of the present invention solves a compatibility problem of multiple devices sharing a driver file very well. When the current device needs to uninstall the driver file, it is ensured that other devices that need to load the driver file can normally load and use the driver file, thereby avoiding the occurrence of the condition of the drive conflict resulted from the erroneous deletion of the driver file.

## Claims

1. A driver management method for a Mac system, comprising:
receiving a driver file uninstallation instruction of a current device;
determining whether a driver file is installed only in a current device among devices without uninstalling the driver file according to the driver file uninstallation instruction; if yes, then uninstalling the driver file; if no, then reserving the driver file.

2. The driver management method for a Mac system according to claim 1, wherein, the step of determining whether a driver file is installed only in a current device among devices without uninstalling the driver file according to the driver file uninstallation instruction; if yes, the uninstalling the driver file; if no, then reserving the driver file comprises:
controlling an installation count of the driver file minus 1;
determining whether the installation count of the driver file is 0;
if yes, then uninstalling the driver file;
if no, then reserving the driver file.

3. The driver management method for a Mac system according to claim 2, before the step of receiving a driver file uninstallation instruction of a current device, further comprising:
receiving a driver file installation instruction of the current device;
installing the driver file of the current device, and controlling the installation count of the driver file plus 1.

4. The driver management method for a Mac system according to claim 3, after the step of installing the driver file of the current device and controlling the installation count of the driver file plus 1, further comprising:
storing device information of the current device when the current device is connected with the Mac system.

5. The driver management method for a Mac system according to claim 4, after the step of storing device information of the current device when the current device is connected with the Mac system, further comprising:
receiving a drive loading instruction;
inquiring the device information of the current device;
according to an inquiry result, loading the driver file for the current device when the device information of the current device exists.

6. The driver management method for a Mac system according to claim 4 or 5, after the step of receiving a driver file uninstallation instruction of a current device, further comprising:
deleting the device information of the current device.

7. A driver management apparatus for a Mac system, comprising an uninstallation module and a configuration management module, wherein:
the uninstallation module is configured to: receive a driver file uninstallation instruction of a current device; uninstall a driver file according to an uninstallation instruction output by the configuration management module; and reserve the driver file according to a reservation instruction output by the configuration management module;
the configuration management module is configured to: determine whether the driver file is installed only in the current device among devices without uninstalling the driver file according to the driver file uninstallation instruction; if yes, then output the uninstallation instruction to the uninstallation module; if no, then output the reservation instruction to the uninstallation module.

8. The driver management apparatus for a Mac system according to claim 7, wherein, the configuration management module comprises a drive counter and a judgment unit, wherein:
the drive counter is configured to: control an installation count of the driver file minus 1 according to the drive file uninstallation instruction of the current device received by the uninstallation module;
the judgment unit is configured to: determine whether the installation count of the driver file recorded in the drive counter is 0; if yes, then output the uninstallation instruction to the uninstallation module; if no, then output the reservation instruction to the uninstallation module.

9. The driver management apparatus for a Mac system according to claim 8, further comprising an installation module, wherein:
the installation module is configured to: receive a driver file installation instruction of the current device; and install the driver file of the current device;
the drive counter is further configured to: control the installation count of the driver file plus 1 according to the drive file installation instruction of the current device received by the installation module.

10. The driver management apparatus for a Mac system according to claim 9, wherein, the configuration management module further comprises a storage unit, wherein
the storage unit is configured to: store device information of the current device when the current device is connected with the Mac system.

11. The driver management apparatus for a Mac system according to claim 10, further comprising a drive loading module, wherein:
the drive loading module is configured to: receive a drive loading instruction; inquire the device information of the current device in the storage unit; and according to an inquiry result, load the driver file for the current device when the device information of the current device exists.

12. The driver management apparatus for a Mac system according to claim 10 or 11, wherein the drive loading module is further configured to: delete the device information of the current device according to the drive file uninstallation instruction of the current device received by the uninstallation module.
